# EUROPEAN PATENT APPLICATION

(11) **EP 2 413 522 A1**
(43) Date of publication of application: **01.02.2012**
(21) Application number: 10755955.1
(22) Date of filing: 18.03.2010
(51) Int. Cl.: H04B 13/00

(54) **COMMUNICATION SYSTEM**

(30) Priority: 26.03.2009 JP 2009077272
(71) Applicant: Alps Electric Co., Ltd., Tokyo 145-8501 (JP)
(72) Inventor: HEBIGUCHI, Hiroyuki, Tokyo 145-8501 (JP); MATSUDA, Shigetoshi, Tokyo 145-8501 (JP); KOISHI, Masaru, Tokyo 145-8501 (JP); NEBIYA, Hideyuki, Tokyo 110-0016 (JP)
(74) Representative: Klunker . Schmitt-Nilson . Hirsch
(86) International application number: PCT/JP2010/054626
(87) International publication number: WO 2010/110157

(57) **Abstract**

To provide a communication system in which transmission efficiency is stable even if a stray capacitance with respect to the earth ground fluctuates, the potential variation of a transmission electrode at a carrier frequency used for communication is small, it is possible to apply the communication system to an intended purpose when being in motion, and communication can be established even if the communication system is held in such a manner that the communication system is covered by a hand. A communication system according to the present invention includes a transmitter (2) configured to provide an information signal, as an electric field, to a transmission medium (1) and a receiver configured to detect the electric field through the transmission medium (1) and obtain the information signal, and the transmitter (2) includes a resonance unit in which a resonant circuit is formed with two electrodes (221) and (222) individually forming electrostatic capacitances between the transmitter and the transmission medium and an inductor (223) connecting the two electrodes (221) and (222) to each other.

## Description

### Technical Field

The present invention relates to a communication system in which transmission and reception are performed through a transmission medium such as a human body or the like.

### Background Art

In recent years, with the development of technology, as a truly-new communication method, a communication method has been proposed in which an electric field induced to a transmission medium such as a human body or the like is used. An example of such a communication system is disclosed in PTL 1. In this communication system, in a case in which at least one of a transmitter and a receiver is connected to an alternating-current source or the like, since being grounded to earth ground, it is possible to realize favorable communication in which the transmission efficiency or the reception efficiency thereof is high.

On the other hand, in this communication system, when both of the transmitter and the receiver are driven by batteries, attached to a human body, and used in a state in which the transmitter and the receiver float electrically (in point of a direct current) from the earth ground, a signal attenuates owing to a stray capacitance (Cg) between a transmission circuit ground and the earth ground or a stray capacitance (Cb) between the human body and the earth ground. Therefore, there occurs a problem that the transmission efficiency or the reception efficiency is lowered and hence the electrical potential of a transmission electrode becomes low, or an electric field received by a reception electrode becomes weak and hence communication quality is lowered or communication becomes impossible.

As a method for solving this problem, in PTL 2, the configuration of a transmitter is proposed in which resonating means for series-resonating with the stray capacitance Cg between the transmission circuit ground and the earth ground is provided.

### Citation List

### Patent Literature

PTL 1: PCT Japanese Translation Patent Publication No. 11-509380
PTL 2: Japanese Unexamined Patent Application Publication No. 2004-153708

### Summary of Invention

### Technical Problem

However, in such a configuration as disclosed in PTL 2, the stray capacitance Cg between the transmission circuit ground and the earth ground and the stray capacitance Cb between the human body and the earth ground are included in a resonant circuit, and the earth ground is included in the path of the resonant circuit. Therefore, when the posture of the human body changes and the stray capacitance Cg or the stray capacitance Cb fluctuates, there occurs a problem that the resonant condition of the resonant circuit also fluctuates and communication becomes unstable. Therefore, in order to establish stable communication, it is necessary to implement a countermeasure such as the limitation of a posture when used, the addition of a large-scaled circuit used for automatically controlling a resonant condition so that the resonant condition does not change even if the posture changes, or the like.

In recent years, the number of people walking or running for health has been increasing. In addition, in order to calculate more accurate burned calories, one person attaches acceleration sensors to the person's hands, the person's legs, or the like, another person monitors the person's heart beats so as not to become overloaded, and stores the measurement result in a data logger. Consequently, such needs as described above have been increasing. When, for such an intended purpose, electric field communication is established using the equipped sensors and the data logger, it is difficult to realize stable communication using a technique of the related art sensitive to the fluctuation of the stray capacitance Cg between the transmission circuit ground and the earth ground or the stray capacitance Cb between the human body and the earth ground, and hence the technique of the related art has not been put to practical use. In addition, the earth ground of the path of the resonant circuit is included. Therefore, when a small transmitter such as a card-type transmitter or the like is held in such a manner that the transmitter is covered by a hand, a resonant condition is broken, transmission efficiency is significantly reduced, and it is difficult to establish communication.

In view of the above-mentioned problem, the present invention is made. In addition, an object thereof is to provide a communication system in which transmission efficiency is stable even if a stray capacitance with respect to the earth ground fluctuates, the potential variation of a transmission electrode at a carrier frequency used for communication is small, it is possible to apply the communication system to an intended purpose when being in motion, and communication can be established even if the communication system is held in such a manner that the communication system is covered by a hand.

### Solution to Problem

A communication system according to the present invention includes a transmitter configured to provide an information signal, as an electric field, to a transmission medium and a receiver configured to detect the electric field through the transmission medium and obtain the information signal, and the transmitter includes a resonance unit in which a resonant circuit is formed with two electrodes individually forming electrostatic capacitances between the transmitter and the transmission medium and an inductor connecting the two electrodes to each other.

According to this configuration, since the resonant circuit including the transmission medium is configured, the efficiency of the supply of a signal to the transmission medium is high, and the resonant circuit includes no stray capacitance with respect to the earth ground. Therefore, transmission efficiency is less susceptible to the earth ground, it is possible to establish communication even if the transmitter is held in such a manner that the transmitter is covered by a hand, and it is possible to establish stable communication even if a posture is changed.

In the communication system according to the present invention, it is desirable that a transmission circuit coupled to the resonance unit owing to magnetic coupling based on a transformer or capacitive coupling based on a capacitor is included and a signal is transmitted from the transmission circuit to the resonance unit. According to this configuration, it is possible to further suppress the influence of the earth ground through the transmission circuit.

In the communication system according to the present invention, it is desirable that at least one of the two electrodes includes a plurality of electrodes. According to this configuration, the electrode easily tracks even the surface of a hubbly transmission medium, and it is possible to enlarge an electrostatic capacitance between the electrode and the transmission medium. In addition, since it is possible to ensure the electrostatic capacitance between the electrode and the transmission medium, communication is stabilized.

In the communication system according to the present invention, it is desirable that at least one of the two electrodes includes flexible conductive material. According to this configuration, the electrode easily tracks even the surface of a hubbly transmission medium, and it is possible to enlarge an electrostatic capacitance between the electrode and the transmission medium. In addition, since it is possible to ensure the electrostatic capacitance between the electrode and the transmission medium, communication is stabilized.

In the communication system according to the present invention, it is desirable that individual electrostatic capacitances between the two electrodes and the transmission medium are nearly equal to each other. According to this configuration, within a limited area, it is possible to maximize an electrostatic capacitance included in the resonance unit.

In the communication system according to the present invention, it is desirable that a stray capacitance between the two electrodes is smaller than the electrostatic capacitances formed between the electrodes and the transmission medium. According to this configuration, it is possible to suppress signal attenuation due to the stray capacitance between the two electrodes, and it is possible to improve signal supply efficiency.

### Advantageous Effects of Invention

A communication system according to the present invention includes a transmitter configured to provide an information signal, as an electric field, to a transmission medium and a receiver configured to detect the electric field through the transmission medium and obtain the information signal, and the transmitter includes a resonance unit in which a resonant circuit is formed with two electrodes individually forming electrostatic capacitances between the transmitter and the transmission medium and an inductor connecting the two electrodes to each other. Therefore, transmission efficiency is stable even if a stray capacitance with respect to the earth ground fluctuates, the potential variation of a transmission electrode at a carrier frequency used for communication is small, it is possible to apply the communication system to an intended purpose when being in motion, and communication can be established even if the communication system is held in such a manner that the communication system is covered by a hand.

### Brief Description of Drawings

[Fig. 1] Fig. 1 is a schematic configuration diagram illustrating a portion on a transmitter side of a communication system according to a first embodiment of the present invention.
[Fig. 2] Fig. 2 is a diagram illustrating an equivalent circuit of the portion on the transmitter side of the communication system illustrated in Fig. 1.
[Fig. 3] Fig. 3 is a schematic configuration diagram illustrating a portion on a transmitter side of a communication system according to the first embodiment of the present invention.
[Fig. 4] Fig. 4 is a diagram illustrating an acceptable range of a stray capacitance Cg of the communication system according to the first embodiment of the present invention.
[Fig. 5] Fig. 5 is a diagram illustrating an acceptable range of a stray capacitance Cb of the communication system according to the first embodiment of the present invention.
[Fig. 6] Fig. 6 is a diagram illustrating an equivalent circuit of a portion on a transmitter side of a communication system according to a second embodiment of the present invention.
[Fig. 7] Fig. 7 is a diagram illustrating an acceptable range of a stray capacitance Cg of the communication system according to the second embodiment of the present invention.
[Fig. 8] Fig. 8 is a diagram illustrating an acceptable range of a stray capacitance Cb of the communication system according to the second embodiment of the present invention.
[Fig. 9] Fig. 9 is a diagram illustrating an equivalent circuit of a portion on a transmitter side of a communication system according to a third embodiment of the present invention.
[Fig. 10] Fig. 10 is a diagram illustrating an acceptable range of a stray capacitance Cg of the third embodiment according to the third embodiment of the present invention.
[Fig. 11] Fig. 11 is a diagram illustrating an acceptable range of a stray capacitance Cb of the third embodiment according to the third embodiment of the present invention.
[Fig. 12] Fig. 12 is a diagram illustrating an equivalent circuit of a portion on a transmitter side of a communication system of the related art.
[Fig. 13] Fig. 13 is a diagram illustrating an acceptable range of a stray capacitance Cg of the communication system of the related art.
[Fig. 14] Fig. 14 is a diagram illustrating an acceptable range of a stray capacitance Cb of the communication system of the related art.

### Description of Embodiments

Hereinafter, embodiments of the present invention will be described in detail with reference to accompanying drawings.

### (First Embodiment)

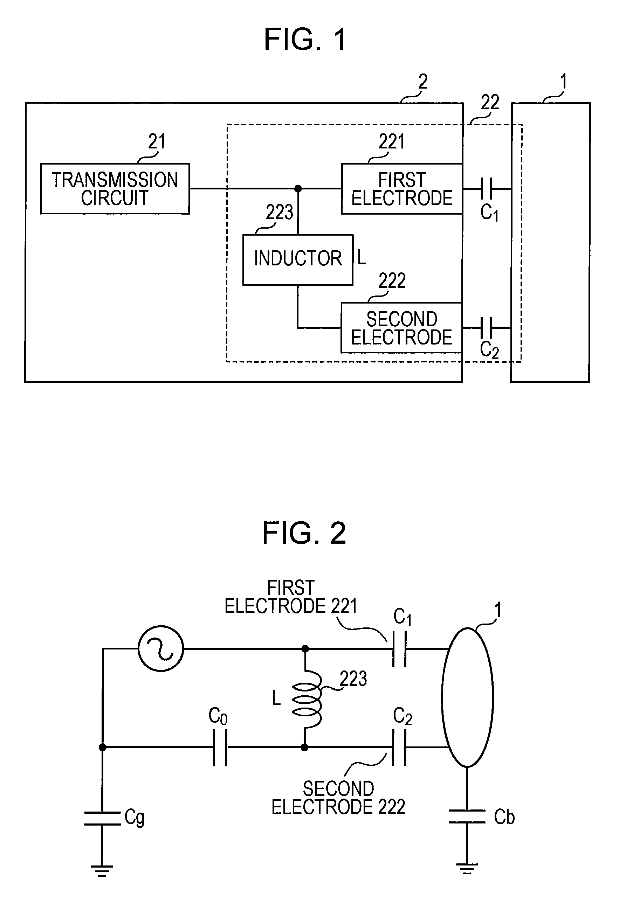

Fig. 1 is a schematic configuration diagram illustrating a portion on a transmitter side of a communication system according to an embodiment of the present invention. In addition, Fig. 2 is a diagram illustrating an equivalent circuit of the portion on the transmitter side of the communication system illustrated in Fig. 1. The communication system illustrated in Fig. 1 mainly includes a transmission medium 1 such as a human body or the like configured to transmit an information signal through an electric field, a transmitter 2 configured to provide the information signal, as an electric field, to the transmission medium 1, and a receiver (not illustrated) configured to detect the electric field through the transmission medium 1 and obtain the electric field as the information signal.

In this communication system, between the transmitter 2 and the transmission medium (here, a human body) 1 and between the receiver and the transmission medium (here, the human body) 1, capacitive coupling (the capacitive coupling between the transmitter 2 and the transmission medium 1 is formed using capacitances C1 and C2) is electrically formed through capacitors, and an information signal modulated by a carrier wave is transmitted as an electric field. In this case, while a displacement current flows in the transmission medium, no steady current flows in the transmission medium. Therefore, it is not necessary to electrically form a conductive connection. Accordingly, for example, even if the transmitter is left in a pocket, the transmitter and the transmission medium are coupled to each other through a thin cloth. Therefore, it is possible to transmit the information signal.

The transmitter 2 provides, as an electric field, the modulated information signal to the transmission medium. The transmitter 2 mainly includes a transmission circuit 21 and a resonance unit 22. The transmission circuit 21 includes a modulation circuit configured to modulate a carrier wave with the information signal and a converter circuit configured to amplify and convert the modulated signal into a voltage change. In the resonance unit 22, the resonant circuit is formed using a first electrode 221 and a second electrode 222 forming the electrostatic capacitances C1 and C2 between the first electrode 221 and second electrode 222 and the transmission medium 1, respectively, and an inductor L 223 connecting the first and second electrodes 221 and 222 to each other.

In the present invention, it is desirable that, in a state in which the transmission circuit 21 and the resonance unit 22 are coupled to each other owing to magnetic coupling based on a transformer or capacitive coupling based on a capacitor, a signal is transmitted from the transmission circuit 21 to the resonance unit 22. Accordingly, it is possible to further suppress the influence of the earth ground through the transmission circuit 21.

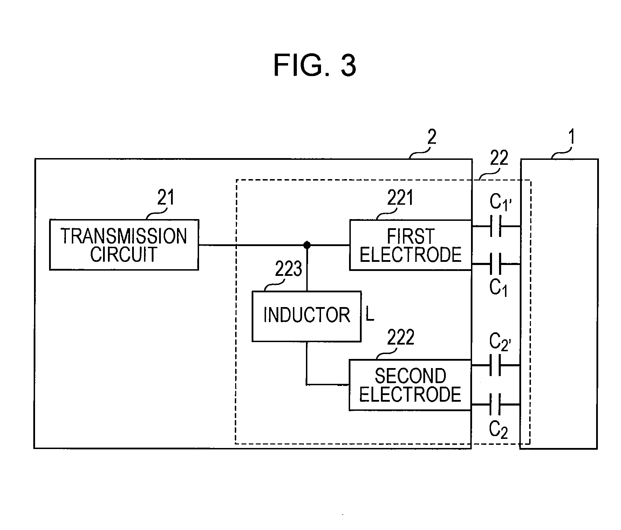

In addition, in the present invention, as illustrated in Fig. 3, it is desirable that at least one of the first electrode 221 and the second electrode 222 includes a plurality of electrodes (In Fig. 3, each of the first electrode 221 and the second electrode 222 includes two electrodes). Consequently, the electrode easily tracks even the surface of the hubbly transmission medium 1, and it is possible to stabilize coupling between the surface of a human body including a complicated curved surface and the electrode. In addition, accordingly, it is possible to enlarge the electrostatic capacitances between the electrodes 221 and 222 and the transmission medium 1. Furthermore, since it is possible to ensure the electrostatic capacitances between the electrodes 221 and 222 and the transmission medium 1, communication is stabilized.

In addition, in the present invention, it is desirable that at least one of the first electrode 221 and second electrode 222 includes flexible conductive material. Accordingly, the electrodes 221 and 222 easily track even the surface of the hubbly transmission medium 1, and it is possible to stabilize coupling between the surface of the human body including the complicated curved surface and the electrode. In addition, accordingly, it is possible to enlarge an electrostatic capacitance between the electrodes 221 and 222 and the transmission medium 1. In addition, since it is possible to ensure the electrostatic capacitance between the electrodes 221 and 222 and the transmission medium 1, communication is stabilized.

In addition, in the present invention, it is desirable that the individual electrostatic capacitances C1 and C2 between the first electrode 221 and second electrode 222 and the transmission medium 1 are nearly equal to each other (C1 ≈ C2). Accordingly, within a limited area, it is possible to maximize electrostatic capacitances included in the resonance unit 22.

In addition, in the present invention, it is desirable that the stray capacitance Cs between the first electrode 221 and the second electrode 222 is smaller than the electrostatic capacitances C1 and C2 formed between the electrodes 221 and 222 and the transmission medium 1 (Cs < C1 ≈ C2). Accordingly, it is possible to suppress signal attenuation due to the stray capacitance Cs between the two electrodes 221 and 222, and it is possible to improve signal supply efficiency.

The receiver detects the electric field through the transmission medium and obtains a demodulated signal corresponding to the information signal. The receiver faces the transmission medium, and includes a reception electrode for receiving the electric field from the transmission medium and a resonant circuit. As a stage subsequent to the resonant circuit, a detection circuit amplifying and detecting the electric field and a demodulation circuit demodulating the information signal using a detected physical quantity are connected.

When communication is performed in the communication system including the above-mentioned configuration, in the transmitter 2, a carrier wave, at the frequency (tens of kilohertz to tens of megahertz) of which the human body that is the transmission medium 2 shows conductivity, is modulated with the information signal, and the modulated signal is obtained. The modulated signal is amplified and converted into a voltage change. By applying the voltage change to the electrode of the transmitter, an electric field corresponding to the modulated signal is generated around the electrode. In addition, the electric field is provided to the human body. The electric field provided to the human body is received by the reception electrode of the receiver. When the electric field is added to the reception electrode, the modulated signal is detected in the resonant circuit and the detection circuit located at the subsequent stage thereof. In addition, in the demodulation circuit located at the subsequent stage of the detection circuit, the modulated signal is demodulated using the carrier wave used in the transmitter, and the information signal is acquired. In such a way as described above, it is possible to transmit and receive the information signal using the human body as the transmission medium.

In this communication system, since the resonant circuit including the transmission medium 1 is configured, the efficiency of the supply of a signal to the transmission medium 1 is high. In addition to this, since the resonant circuit includes no stray capacitance with respect to the earth ground, transmission efficiency is less susceptible to the earth ground, it is possible to establish communication even if the transmitter 2 is held in such a manner that the transmitter 2 is covered by a hand, and it is possible to establish stable communication even if a posture is changed.

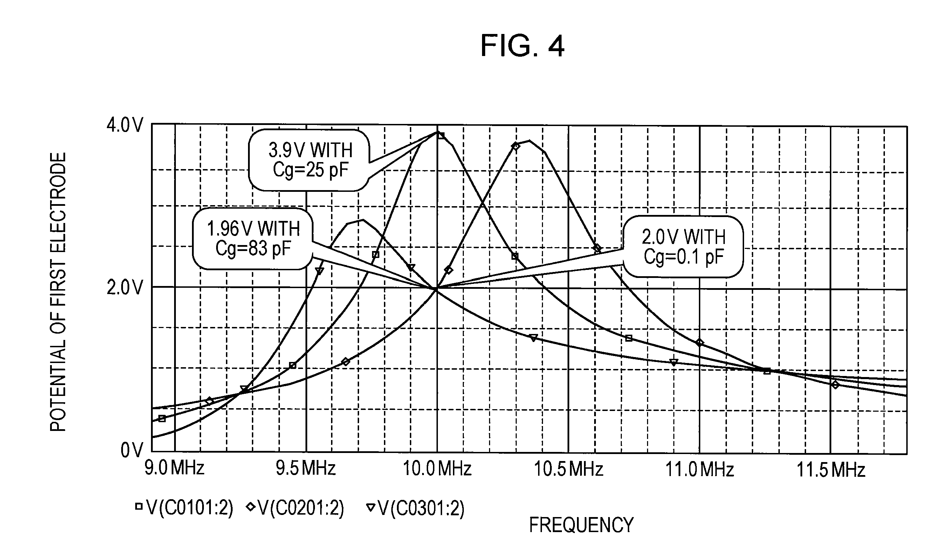

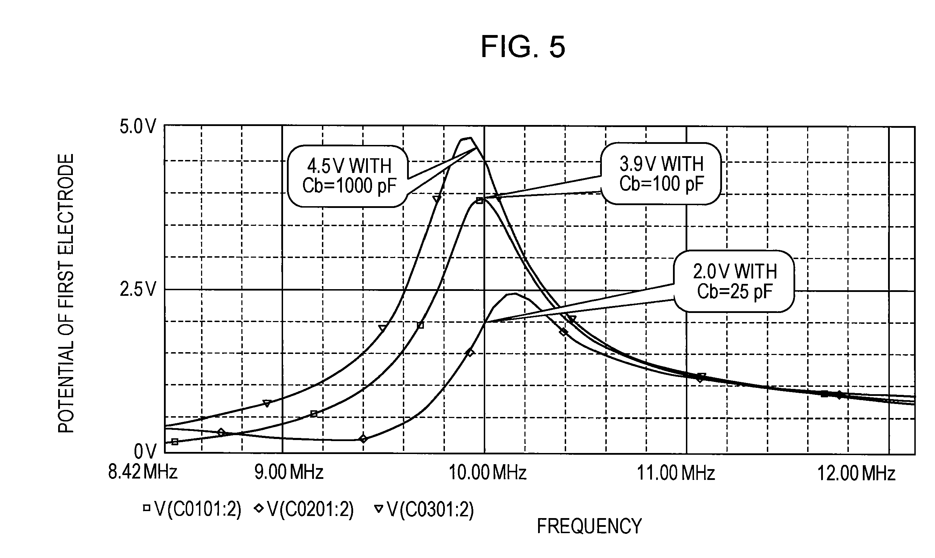

Next, an acceptable range of a stray capacitance of the transmitter in the communication system according to the present invention will be described. With respect to the circuit illustrated in Figs. 1 and 2, a simulation was run. The result thereof is illustrated in Figs. 4 and 5. In the circuit illustrated in Figs. 1 and 2, as a standard condition, it was assumed that the voltage magnitude of a signal source was 1 Vpp, coupling capacitances between the transmission medium 1 and the electrodes 221 and 222 were 80 pF, a stray capacitance Cg between the transmitter 2 and the earth was 25 pF, a stray capacitance Cb between the transmission medium 1 and the earth was 100 pF, a resonance-use capacitor C₀ was 20 pF, and the inductor L 223 was set to 3.96 µH so as to resonate at 10 MHz. Under such a condition, the stray capacitances Cg and Cb were changed independently, and it was assumed that the stray capacitances Cg and Cb were regarded as acceptable under the condition that the electrical potential of the first electrode 221 at 10 MHz ranged from 0.5 times that of the standard condition to 1.5 times that of the standard condition, thereby obtaining the acceptable ranges of the stray capacitances Cg and Cb. The acceptable range of the stray capacitance Cg is illustrated in Fig. 4, and the acceptable range of the stray capacitance Cb is illustrated in Fig. 5.

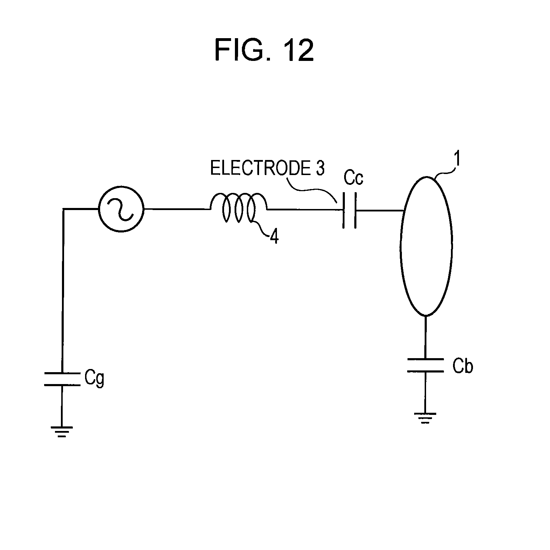

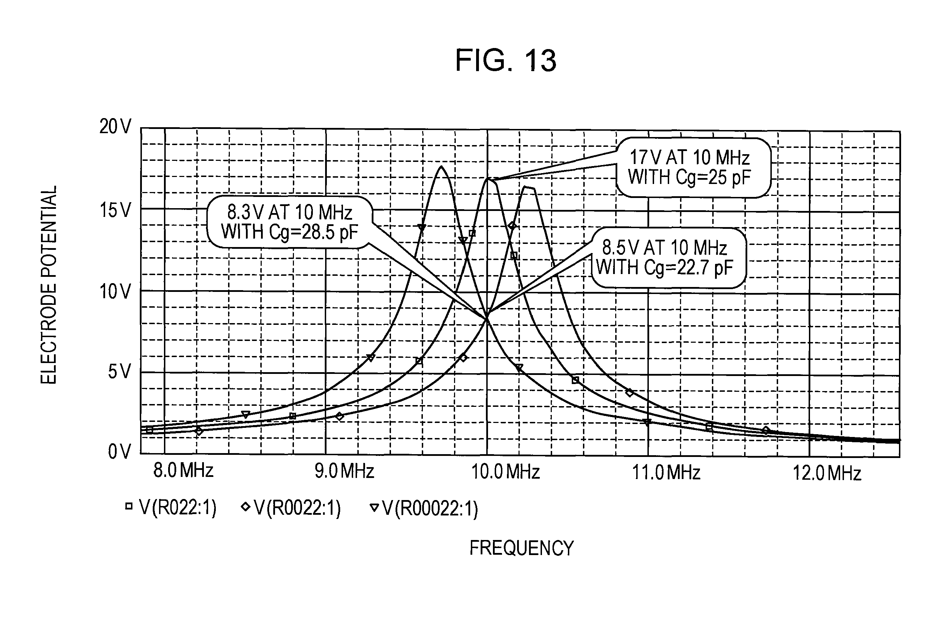

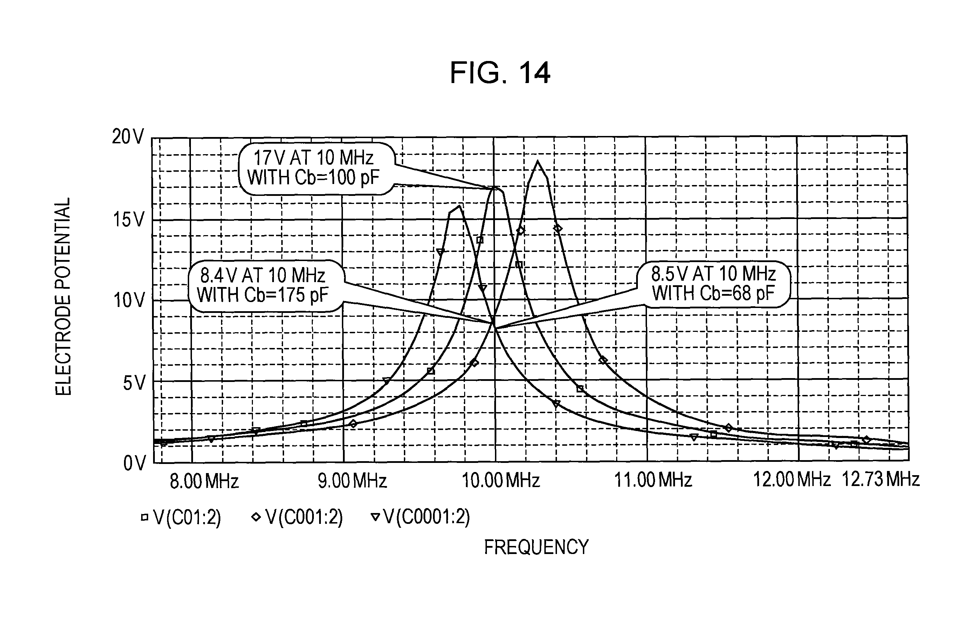

In addition, for comparison, a simulation was run with respect to a circuit illustrated in Fig. 12. A communication system illustrated in Fig. 12 is a communication system (the configuration thereof is disclosed in PTL 2) including a transmitter in which resonating means for series-resonating with the stray capacitance Cg between a transmission circuit ground and the earth ground. The result thereof is illustrated in Figs. 13 and 14. In the circuit illustrated in Fig. 12, as a standard condition, it was assumed that the voltage magnitude of a signal source was 1 Vpp, a coupling capacitance between the transmission medium 1 and an electrode 3 was 30 pF, the stray capacitance Cg between the transmitter 2 and the earth was 25 pF, the stray capacitance Cb between the transmission medium 1 and the earth was 100 pF, and an inductor L4 was set to 21 µH so as to resonate at 10 MHz. Under such a condition, the stray capacitances Cg and Cb were changed independently, and it was assumed that the stray capacitances Cg and Cb were regarded as acceptable under the condition that the electrical potential of the electrode 3 at 10 MHz ranged from 0.5 times that of the standard condition to 1.5 times that of the standard condition, thereby obtaining the acceptable ranges of the stray capacitances Cg and Cb. The acceptable range of the stray capacitance Cg is illustrated in Fig. 13, and the acceptable range of the stray capacitance Cb is illustrated in Fig. 14.

As will be appreciated from Fig. 13, in the communication system of the related art, illustrated in Fig. 12, the acceptable range of the stray capacitance Cg was from 22.7 pF to 28.5 pF, and a fluctuation within ± a little more than 10% (90% to 115%) was only acceptable with respect to 25 pF of the standard condition. When a wearable device is considered in the communication system of such an acceptable range, the stray capacitance Cg corresponds to a height from the earth to the transmitter when the transmitter is worn, and this means that a height at which the transmitter is attached to the human body is subjected to significant restriction.

On the other hand, as will be appreciated from Fig. 4, in the communication system of the present invention, illustrated in Figs. 1 and 2, the acceptable range of the stray capacitance Cg was from 0.1 pF to 83 pF, and a large fluctuation (0.4% to 332%) was acceptable with respect to 25 pF of the standard condition. Accordingly, even if the transmitter is attached to the human body, a restriction on an attachment position is not severe.

In the same way, as will be appreciated from Fig. 14, in the communication system of the related art, illustrated in Fig. 12, the acceptable range of the stray capacitance Cb was from 68 pF to 175 pF, and a small fluctuation (68% to 175%) was only acceptable with respect to 100 pF of the standard condition. On the other hand, as will be appreciated from Fig. 5, in the communication system of the present invention, illustrated in Figs. 1 and 2, the acceptable range of the stray capacitance Cb was from 25 pF to 1000 pF, and a large fluctuation (25% to 1000%) was acceptable with respect to 100 pF of the standard condition. The stray capacitance Cb is the stray capacitance of the human body with respect to the earth ground, and a case in which a person stands erect with both legs on the earth nearly corresponds to 100 pF of the standard condition. Assuming that one leg is fully floated and the heel of the other leg in contact with the earth is also floated, it may be assumed that the stray capacitance Cb while walking is 25 pF, namely, about one quarter of 100 pF. Accordingly, while, in the communication system of the related art, it is difficult to deal with communication performed while walking, it may be possible to deal with communication performed while walking, in the communication system of the present invention.

### (Second Embodiment)

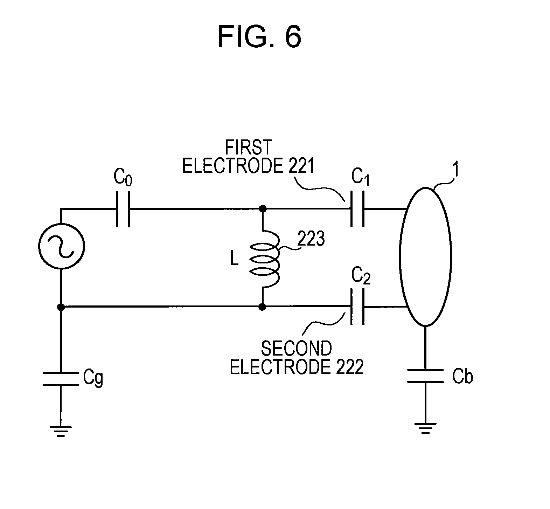

In the present embodiment, a configuration will be described in which the transmission circuit ground, one terminal of the inductor L 223, and the second electrode 222 are directly connected to one another. Fig. 6 is a diagram illustrating the equivalent circuit of a portion on a transmitter side of a communication system according to a second embodiment of the present invention. The communication system illustrated in Fig. 6 is a communication system including a transmitter in which the transmission circuit ground, one terminal of the inductor L 223, and the second electrode 222 are directly connected to one another.

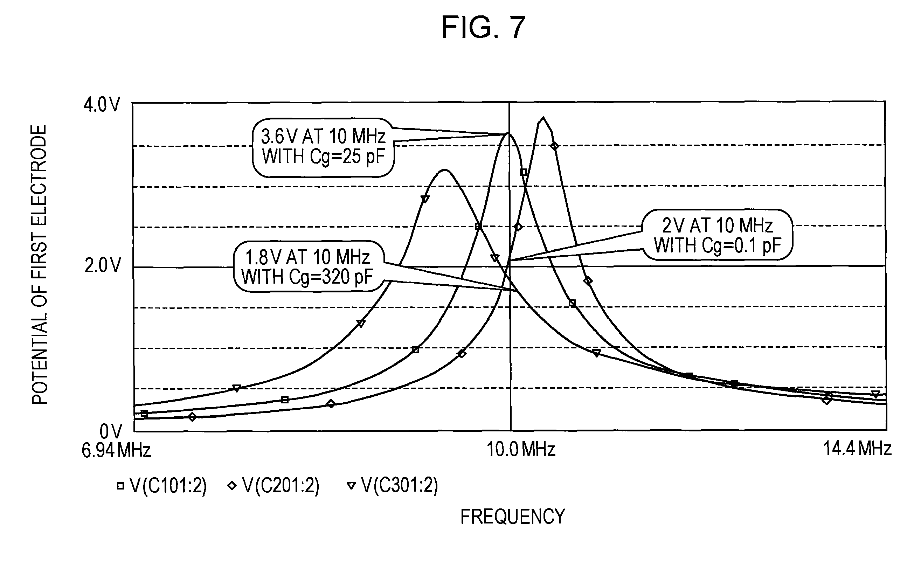

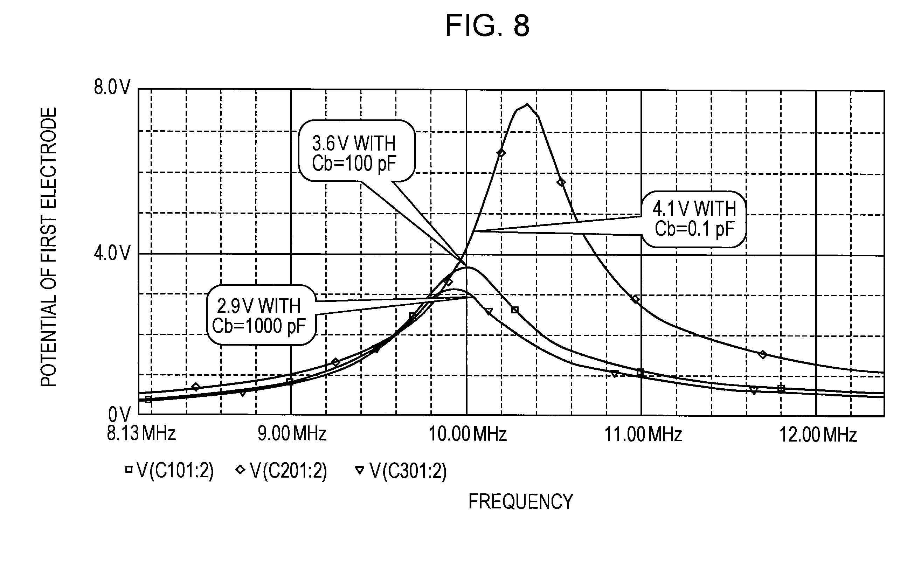

With respect to the circuit illustrated in Fig. 6, a simulation was run. The result thereof is illustrated in Figs. 7 and 8. In the circuit illustrated in Fig. 6, as a standard condition, it was assumed that the voltage magnitude of a signal source was 1 Vpp, coupling capacitances between the transmission medium 1 and the electrodes 221 and 222 were 80 pF, the stray capacitance Cg between the transmitter 2 and the earth was 25 pF, the stray capacitance Cb between the transmission medium 1 and the earth was 100 pF, a resonance-use capacitor C₀ was 20 pF, and an inductor L 223 was set to 3.96 µH so as to resonate at 10 MHz. Under such a condition, the stray capacitances Cg and Cb were changed independently, and it was assumed that the stray capacitances Cg and Cb were regarded as acceptable under the condition that the electrical potential of the first electrode 221 at 10 MHz ranged from 0.5 times that of the standard condition to 1.5 times that of the standard condition, thereby obtaining the acceptable ranges of the stray capacitances Cg and Cb. The acceptable range of the stray capacitance Cg is illustrated in Fig. 7, and the acceptable range of the stray capacitance Cb is illustrated in Fig. 8.

As will be appreciated from Fig. 7, in the communication system of the present invention, illustrated in Fig. 6, the acceptable range of the stray capacitance Cg was from 0.1 pF to 320 pF, and a large fluctuation (0.4% to 1280%) was acceptable with respect to 25 pF of the standard condition. In addition, in the communication system of the present invention, illustrated in Fig. 8, the acceptable range of the stray capacitance Cb was from 0.1 pF to 1000 pF, and a large fluctuation (0.1% to 1000%) was acceptable with respect to 100 pF of the standard condition. In this result, even compared with the communication system of the related art and the communication system of the first embodiment, the acceptable range is enlarged when the stray capacitances Cg and Cb are small. In other words, this means that it is possible to establish communication even if both the transmitter 2 and the human body stay away from the earth to some extent. In addition, even if the stray capacitance Cb is 0.1 pF with respect to 100 pF of the standard condition, the stray capacitance Cb is acceptable. Therefore, it may be considered that it is possible to establish communication while running, not to mention communication while walking.

### (Third Embodiment)

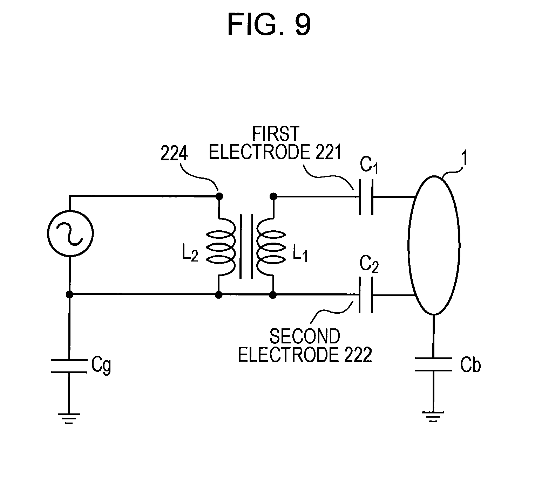

In the present embodiment, a configuration will be described in which a signal is transmitted from the transmission circuit 21 to the resonance unit 22 using a transformer. Fig. 9 is a diagram illustrating the equivalent circuit of a portion on a transmitter side of a communication system according to a third embodiment of the present invention. The communication system illustrated in Fig. 9 is a communication system including a transmitter in which a signal is transmitted from the transmission circuit 21 to the resonance unit 22 using a transformer.

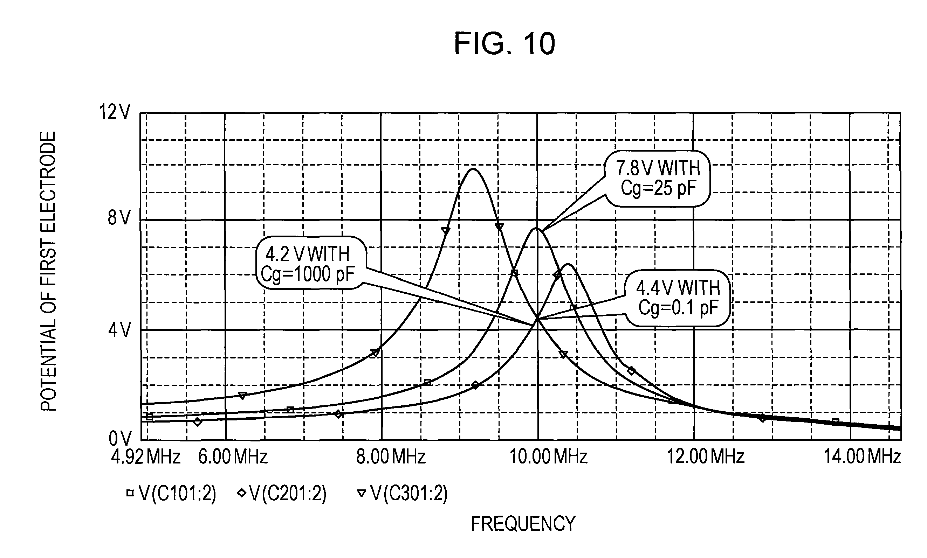

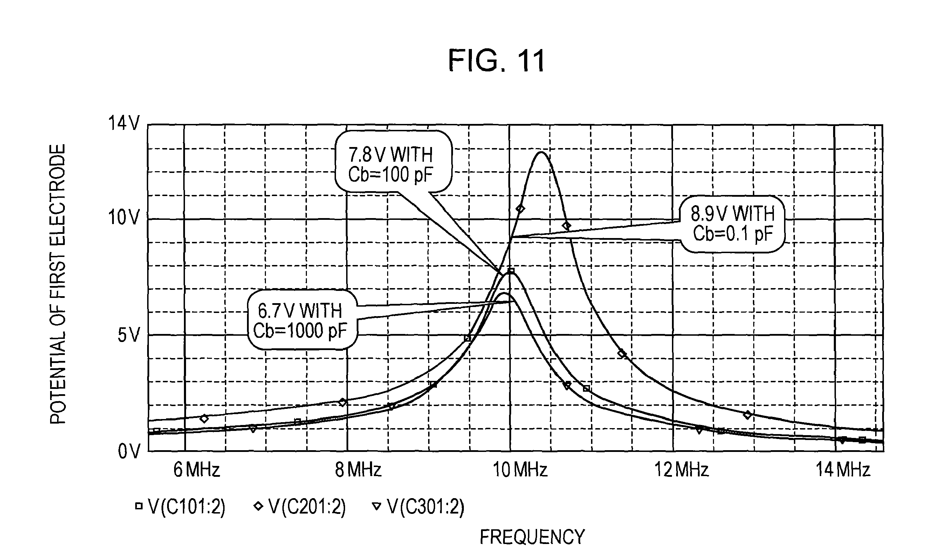

With respect to the circuit illustrated in Fig. 9, a simulation was run. The result thereof is illustrated in Figs. 10 and 11. In the circuit illustrated in Fig. 9, as a standard condition, it was assumed that the voltage magnitude of a signal source was 1 Vpp, coupling capacitances between the transmission medium 1 and the electrodes 221 and 222 were 80 pF, a stray capacitance Cg between the transmitter 2 and the earth was 25 pF, a stray capacitance Cb between the transmission medium 1 and the earth was 100 pF, a resonance-use capacitor C₀ was 20 pF, and the inductor component of a transformer 224 was set to 3.96 µH so as to resonate at 10 MHz. Under such a condition, the stray capacitances Cg and Cb were changed independently, and it was assumed that the stray capacitances Cg and Cb were regarded as acceptable under the condition that the electrical potential of the first electrode 221 at 10 MHz ranged from 0.5 times that of the standard condition to 1.5 times that of the standard condition, thereby obtaining the acceptable ranges of the stray capacitances Cg and Cb. The acceptable range of the stray capacitance Cg is illustrated in Fig. 10, and the acceptable range of the stray capacitance Cb is illustrated in Fig. 11.

As will be appreciated from Fig. 10, in the communication system of the present invention, illustrated in Fig. 9, the acceptable range of the stray capacitance Cg was from 0.1 pF to 1000 pF, and a large fluctuation (0.4% to 4000%) was acceptable with respect to 25 pF of the standard condition. In addition, in the communication system of the present invention, illustrated in Fig. 11, the acceptable range of the stray capacitance Cb was from 0.1 pF to 1000 pF, and a large fluctuation (0.1% to 1000%) was acceptable with respect to 100 pF of the standard condition. In this result, even compared with the communication system of the second embodiment, the acceptable range is enlarged in a direction in which the value of the stray capacitance Cg increases. This means that a communication state is maintained even if the transmitter 2 is placed low enough to come in contact with the earth ground. For example, when it is assumed that a transmitter including an acceleration sensor or the like is attached to a wrist, an ankle, a head, or the like and communication is established between the transmitter and a receiver including a data logger, the receiver being worn on a hip, it is possible to establish communication in the same way as in a standing position even if an exercise for dieting is performed, abdominal muscles are strengthened with lying down on a mat, and push-ups are performed.

The present invention is not limited to the above-mentioned embodiments, and may be implemented with various modifications. For example, a configuration may be adopted in which a variable capacitance is provided between the first electrode and the second electrode, thereby adjusting a resonance frequency. In addition, the configurations of the modulation circuit and the converter circuit in the transmitter and the detection circuit and the demodulation circuit in the receiver are not limited to specific configurations, and may be arbitrarily changed. For example, a baseband transmission system in which the information signal is transmitted without being modulated and demodulated may be applied to the present invention. Using this communication method, it may be possible to omit the modulation circuit and the demodulation circuit from the transmitter and the receiver, respectively. In addition, dimensions, numerical values, and the like in the above-mentioned embodiments are not limited to specific ones, and may be changed within the scope of the invention. In addition, modifications can be made without departing from the scope of the invention.

This application is based on the Japanese Patent Application No. 2009-077272 filed on March 26, 2009, the entire content of which is hereby incorporated.

## Claims

1. A communication system comprising:
a transmitter configured to provide an information signal, as an electric field, to a transmission medium; and
a receiver configured to detect the electric field through the transmission medium and obtain the information signal, wherein
the transmitter includes a resonance unit in which a resonant circuit is formed with two electrodes individually forming electrostatic capacitances between the transmitter and the transmission medium and an inductor connecting the two electrodes to each other.

2. The communication system according to claim 1, further comprising:
a transmission circuit coupled to the resonance unit owing to magnetic coupling based on a transformer or capacitive coupling based on a capacitor, wherein
a signal is transmitted from the transmission circuit to the resonance unit.

3. The communication system according to claim 1, wherein
at least one of the two electrodes includes a plurality of electrodes.

4. The communication system according to claim 1, wherein
at least one of the two electrodes includes flexible conductive material.

5. The communication system according to claim 1, wherein
individual electrostatic capacitances between the two electrodes and the transmission medium are nearly equal to each other.

6. The communication system according to claim 5, wherein
a stray capacitance between the two electrodes is smaller than the electrostatic capacitances formed between the electrodes and the transmission medium.
